Europäisches Patentamt

European Patent Office

Office européen des brevets

(11) Publication number: **0 685 797 A1**

## (12) EUROPEAN PATENT APPLICATION

(21) Application number: **94410040.3**

(22) Date of filing: **03.06.94**

(51) Int. Cl.⁶: **G06F 13/24**, G06F 13/38

(43) Date of publication of application:
**06.12.95 Bulletin 95/49**

(84) Designated Contracting States:
**DE FR GB**

(71) Applicant: **Hewlett-Packard Company**
**3000 Hanover Street**
**Palo Alto,**
**California 94304 (US)**

(72) Inventor: **Caillard, Alain**
**Le Montalay**
**F-38220 Notre Dame de Mesage (FR)**

(74) Representative: **Squibbs, Robert Francis et al**
**Intellectual Property Section,**
**Legal Department,**
**Hewlett-Packard France,**
**Etablissements de Grenoble**
**F-38053 Grenoble Cédex 9 (FR)**

(54) Overflow protection circuit for UART device.

(57) A personal computer (11) is typically connected to a modem (10) through a V24 or RS232C link with the computer (11) being provided with a UART device (13) connected to receive character data over the link, and a processor (17) tasked with servicing the UART. The UART device (13) frequently includes a receive FIFO (14) and is arranged to generate a processor interrupt request (IRQ) upon the FIFO being filled to a predetermined threshold. With such an arrangement, if the processor (14) cannot service the interrupt quickly enough (because, for example, it is engaged on a critical task) then character data may overflow the UART FIFO (14) and become lost. To avoid this happening, an overflow protection circuit (18) is provided that is operative to drop an RTS line of the link in the event that an interrupt request from the UART (13) remains uncleared for a predetermined number N of character intervals at the port receive speed where N is less than the remaining empty size of the FIFO at the time the interrupt request signal is first generated.

**FIG. 1**

EP 0 685 797 A1

## Field of the Invention

The present invention relates to an overflow protection circuit for a UART device providing an interface to a serial link and in particular, but not exclusively, to a V24-type link; in the context of the present specification, a "V24-type" link is one operating to the CCITT V24 standard (including a subset thereof) or a substantially equivalent standard such as the EIA (Electronic Industries Association, USA) RS232C standard.

## Discussion of the Prior Art

Most personal computers (PCs) are nowadays provided with at least one V24 port for enabling the computer to be connected to a remote computer through a modem and the Public Switched Telephone Network (PSTN). In this context, the PC constitutes a so-called Data Terminal Equipment (DTE) and the modem a Data Communications Equipment (DCE).

Generally, a DTE will interface with a V24 type link by means of a UART (Universal Asynchronous Receiver/Transmitter) chip device. Such devices are very well known and when receiving data operate to collect incoming bits to form character data for transfer to the main part of the DTE. This transfer is normally initiated by the UART device raising an interrupt request to a processor of the DTE causing the latter to suspend its current operation to service the UART by transferring received data from the UART to main memory.

In order to prevent the DTE from becoming swamped with incoming data which it is unable to handle, some sort of flow control normally needs to be exercised. For a V24-type link this can be done in two ways. Firstly, the CTS (clear to send) line of the V24-type link can be dropped by the DTE thereby signalling to the DCE that it should stop sending data. Secondly, a software protocol can be used (such as XON/XOFF). Generally, the exercise of these flow control methods is the responsibility of the DTE processor.

Many modern UART devices provide a receive character FIFO that can store, for example up to sixteen incoming characters. Such a receive FIFO provides useful buffering easing the timing constraints on servicing of the UART. Typically, such a UART will raise an interrupt request when the FIFO fills to four characters, the processor then having a minimum of twelve character reception periods to service the FIFO (or operate a flow control mechanism) before overflow occurs.

However, it has been found that in certain situations even this arrangement provides inadequate time for the processor to respond; such a situation may arise when the processor is servicing a higher priority interrupt or is carrying out some critical, non-interruptable, task.

It is an object of the present invention to provide a simple way of guarding against data overflow in situations where the UART cannot be serviced in time by the DTE processor.

## Summary of the Invention

According to one aspect of the present invention, there is provided apparatus comprising a serial port for receiving characters at a receive speed, a UART device connected to the serial port, and a processor tasked with servicing the UART, the UART device including a receive FIFO for characters received through the serial port, and means for generating a processor interrupt request upon the FIFO being filled to a predetermined threshold; the apparatus further comprising an overflow protection circuit for setting a control line of the serial port into a predetermined state, intended to halt transmission of characters to the apparatus, in the event that an interrupt request remains uncleared for a predetermined number N of character intervals at the port receive speed where N is less than the remaining empty size of the FIFO at the time the interrupt request signal is first generated.

With such an arrangement, if the processor is unable to service the interrupt request generated by the UART, the overflow protection circuit will automatically set the control line to halt the flow of characters to the apparatus. Preferably, the control line is dropped when there are still at least four empty character slots in the FIFO as this provides a reasonable time for the sending apparatus to halt its transmission before the FIFO overflows.

In one embodiment, the overflow protection circuit comprises:

-- a counter which when enabled by the presence of a said interrupt request, is incremented at a rate dependent on said receive speed; and

-- means for causing the control line to be set in said predetermined state upon the count recorded by the counter reaching a first count value corresponding to the interrupt request having remained uncleared for the predetermined number N of character intervals; removal of the interrupt request prior to the first count value being reached, resulting in resetting of the counter.

Advantageously, the overflow protection circuit includes means for ensuring that the control line when set in its predetermined state, remains in that state for at least a predetermined minimum time. These means are, for example, constituted by means operative to keep the counter enabled between the first count value and a second count value, independent of the presence of an interrupt request.

Preferably, the overflow protection circuit further comprises means responsive to the counter reaching a predetermined count at least equal to the second count value, to inhibit further incrementing of the counter until reset.

The present invention is particularly useful in relation to V24-type serial links with the control line in this case being constituted by the RTS line of the link.

## Brief Description of the Drawings

An overflow protection circuit embodying the invention will now be particularly described by way of non-limiting example, with reference to the accompanying diagrammatic drawings:

**Figure 1**    is a block diagram of a DTE incorporating the overflow protection circuit;

**Figure 2**    is circuit diagram of the overflow protection circuit; and

**Figure 3**    is a timing diagram showing various sample waveforms for the Figure 2 circuit.

## Description of the Preferred Embodiment

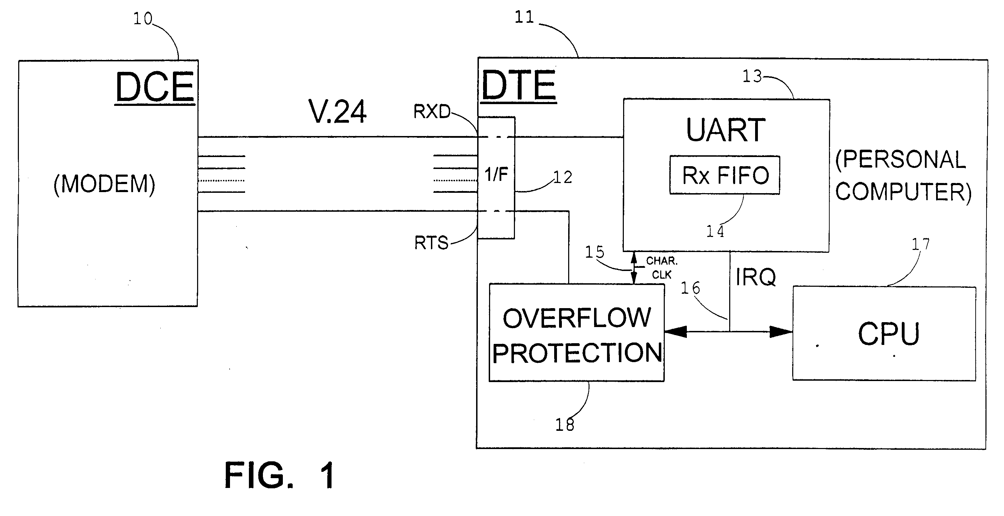

Figure 1 shows a personal computer 11 constituting a DTE that is connected via a V24-type link to a modem 10 constituting a DCE.

The V24-type link may, for example, be a subset of the RS232C standard and typically comprises the following lines:

- protective ground,
- signal ground,
- transmitted data,
- received data - RXD,
- request to send - RTS,
- clear to send
- data set ready,
- data terminal ready.

Only the RXD and RTS lines are explicitly labelled in the Figure 1 as these are the lines of primary interest in the present case. The RXD line carries data transmitted from the DCE to the DTE. The RTS line is a control line going from the DTE to the DCE. When the RTS line is in its ON state, the DCE is held in its transmit mode; when the RTS line is dropped (changed to its OFF state) transmission by the DCE is disabled.

The V24-type link connects to the DTE 11 at a serial port interface 12 that includes appropriate line drivers and receivers.

The DTE includes a UART device 13 of the type provided with a receive character FIFO 14; a suitable UART is the 16550 UART from National Semiconductor. In the present example, it is assumed that the FIFO 14 can hold up to 16 characters received by the UART 13 over the RXD line of the V24-type link.

The speed of the V24-type link is typically low, for example, 19200 baud, the character clock rate of the UART 13 being defined by a character clock input signal 15 (it being appreciated that the character clock signal will generally be at a much higher rate, for example, at 1.8432 MHz, this signal being divided down in the UART to the appropriate character clock rate as required).

The UART 13 is arranged to raise an interrupt request IRQ on line 16 upon the FIFO 13 being filled to a level of four characters. This interrupt request is passed to the processor unit 17 of the DTE for servicing.

Upon the CPU 17 servicing the interrupt request generated by the UART 13, the FIFO 14 will be emptied at a very much higher speed than characters can be received into this FIFO. The potential for overflow of the FIFO therefore generally only arises as a result of a delay by the CPU 17 in servicing the interrupt request, such a delay being occasioned, for example, by the CPU carrying out an essential, uninterruptable, task (such as disk swapping).

In order to prevent overflow occurring in situations where the CPU 17 cannot service the UART within sufficient time, the DTE is provided with an overflow protection circuit 18. This circuit 18 connects to the RTS line of the V24-type link in such a manner that it can put the RTS line in its OFF state to thereby signal to the DCE that it should stop transmission. For clarity, the RTS line is only shown as connected to the overflow protection circuit 18; however, it will be appreciated that the RTS line will generally also be connected elsewhere in relation to the standard functioning of the V24-type link.

The overflow protection circuit 18 basically works by monitoring the interrupt request line 16 and if an interrupt request is maintained for more than a given number of character intervals at the receive speed of the UART, the overflow protection circuit 18 puts the RTS line into its OFF state. The number of elapsed character intervals during which an interrupt request is present is determined by counting the character clock cycles. Typically the overflow protection circuit 18 will drop the RTS line to its OFF state when only four character slots remain empty in the FIFO 14; this then gives the DCE sufficient time to cease transmission for the FIFO 14 not to overflow. If the interrupt request is dropped before the overflow protection circuit 18 drops the RTS line, then the circuit 18 is reset. This arrangement provides a very simple hardware overflow protection circuit for the UART device 13.

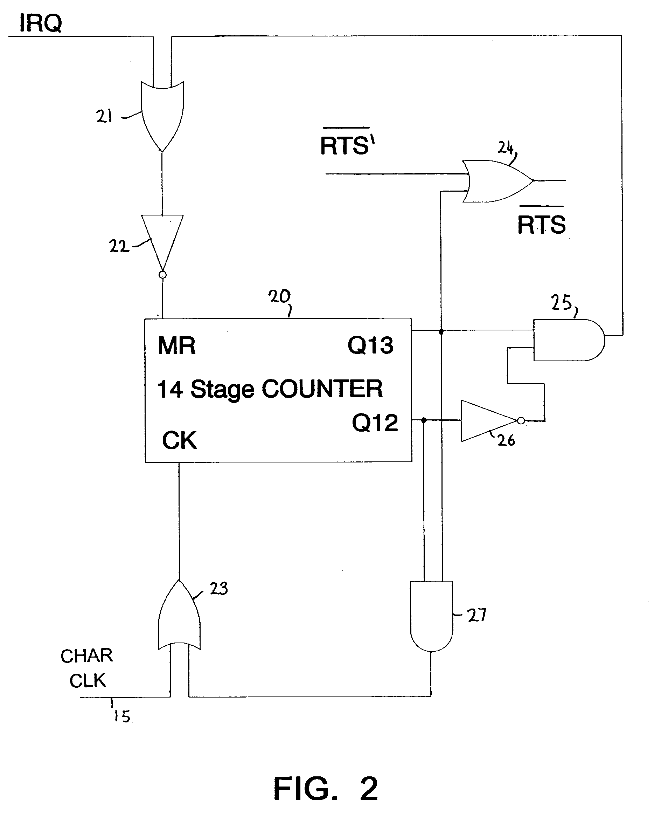

Figure 2 shows a circuit diagram of one implementation of the overflow protection circuit 18 of Figure 1. The heart of the Figure 2 circuit is a multi-stage binary counter 20; in the present embodiment this is a 14-stage counter the last two stages of which have outputs respectively labelled Q12 and Q13 (the output Q13 changing at half the rate of the output Q12). The counter 20 is arranged to be clocked by the character clock 15 which is supplied to a clock input CK of the counter 20 through an OR gate 23; however, the counter 20 is only enabled to count in the absence of a logic "1" signal applied to a reset input MR of the counter 20.

The output Q13 is connected to an OR gate 24 and provides the RTS signal in inverted form. Whilst the counter output Q13 remains low, the state of the inverted RTS signal output from gate 24 is determined by the state of an input signal $\overline{RTS'}$ derived from elsewhere in the DTE and representing the normal control of the RTS line. When the counter output Q13 goes high, the output of gate 24 is also taken high which, of course, results in the RTS signal being taken low into its OFF state.

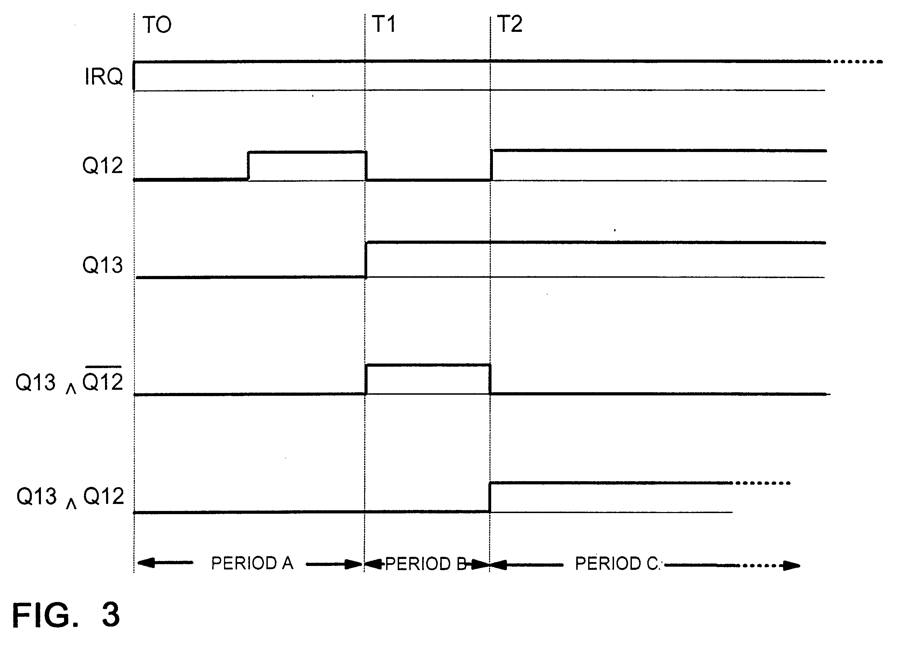

The reset input MR of the counter 20 is controlled by the interrupt request signal IRQ which is fed to the input MR via an OR gate 21 and an inverter 22. When the IRQ signal is low, a logic "1" signal is applied to the MR reset input of the counter holding it in its reset state; in this state the outputs Q12 and Q13 are at logic "0" and the RTS line is unaffected. When the IRQ signal goes high upon the UART issuing an interrupt request to the CPU 17, the logic "1" at the reset input MR of the counter 20 changes to a logic "0" and the counter 20 starts to count the character clock pulses applied to its input CK. The character clock speed and the number of stages of the counter 20 are such that after four character intervals at the receive speed of the UART, the output Q12 of the counter 20 goes high. After a further four character intervals, the output Q12 goes low and the output Q13 goes high. This is illustrated in Figure 3 where output Q13 is shown as going high for the first time at time T1 following an interrupt request being raised at time T0. During the period between T0 and T1 (labelled period A in Figure 3), removal of the interrupt request as a result of the CPU 17 servicing the UART 13, will result in the counter 20 being immediately reset. However, if the interrupt request signal is not dropped before T1 (that is, before the elapse of 8 character intervals), then the going high of the counter output Q13 causes the RTS signal to be dropped signalling to the DCE that it should cease transmission.

In order to avoid any instability in the DCE, the RTS signal should be maintained in its OFF state for a certain minimum period, even if the interrupt request for the UART is removed immediately after the RTS line taking to its OFF state. To this end, resetting of the counter 20 is blocked for 4 character intervals after time T1 (that is, for the period B between T1 and T2) by generating the signal [-(Q13) AND $\overline{(Q12)}$] using an AND gate 25 and an inverter 26 as shown in Figure 2. This logical signal is fed to the OR gate 21 to keep the counter reset input MR low for the period B. As a result, counter output Q13 is maintained high and the signal RTS is kept in its OFF state for the period B regardless of the state of the interrupt request line 16.

Subsequent to time T2, blocking of the resetting of counter 20 is removed and the counter will either then be immediately reset (if the interrupt request IRQ has been removed before time T2) or will be reset when the interrupt request is eventually removed.

If the interrupt request is maintained beyond time T2, then the possibility exists that the counter 20 could complete its count cycle and start counting again from zero; this is, of course, undesirable as it would result in the RTS line being allowed to return to its ON state whilst the interrupt request was still raised. In order to avoid this happening, clocking of the counter 20 is suspended after time T2 by generating the signal [(Q13) and (Q12)] using an AND gate 27, this signal being fed to the OR gate 23 and thus to the clock input of the counter 20. Resetting of the counter after time T2 will, of course, remove the clock inhibit signal produced by the gate 27.

It will be appreciated that although the overflow protection circuit has been described in relation to Figure 2 in terms of discrete logic circuits, the functionality of Figure 2 could equally well be implemented using a gate array. Furthermore, it will be appreciated that various modifications and variations are possible to the above described circuitry and functionality; additionally, the circuitry may be used for serial links other than V24-type links provided a suitable control line is available enabling the the sending device to be signalled to cease transmission.

The described circuitry is considered to be particularly advantageous in terms of its simplicity in providing an overflow protection circuit external to a UART device associated with a V24-type serial link.

**Claims**

1. Apparatus comprising a serial port for receiving characters at a receive speed, a UART device connected to the serial port, and a processor tasked with servicing the UART, the UART device including a receive FIFO for characters received through the serial port, and means for generating a processor interrupt request upon the FIFO being filled to a predetermined threshold; the apparatus further comprising an overflow protection circuit for setting a control line of the serial port into a predetermined state, intended to halt transmission of characters to the apparatus, in the event that a said interrupt request remains uncleared for a predetermined number N of character intervals at the port receive speed where N is less than the remaining empty size of the FIFO at the time the interrupt request signal is first generated.

2. Apparatus according to claim 1, wherein the receive FIFO has a capacity of M characters and said predetermined threshold corresponds to T characters in the FIFO, the value of N being such that (M-T-N) equals four.

3. Apparatus according to claim 1, wherein said overflow protection circuit includes means for ensuring that said control line when set in said predetmined state, remains in that state for at least a predetermined minimum time.

4. Apparatus according to claim 1, wherein said overflow protection circuit comprises:
    -- a counter which when enabled by the presence of a said interrupt request, is incremented at a rate dependent on said receive speed; and
    -- means for causing said control line to be set into said predetermined state upon the count recorded by the counter reaching a first count value corresponding to the interrupt request having remained uncleared for said predetermined number N of character intervals;
removal of the interrupt request prior to said first count value being reached, resulting in resetting of the counter.

5. Apparatus according to claim 4, wherein said overflow protection circuit includes holding means for ensuring that said control line when set in said predetmined state, remains in that state for at least a predetermined minimum time.

6. Apparatus according to claim 5, wherein said holding means comprises means operative to keep said counter enabled between said first count value and a second count value, independent of the presence of said interrupt request.

7. Apparatus according to claim 6, wherein said overflow protection circuit further comprises means responsive to the counter reaching a predetermined count at least equal to said second count value, to inhibit further incrementing of the counter until reset.

8. Apparatus according to any one of the preceding claims, wherein said port is a V24-type serial port and said control line is the RTS line of the port.

FIG. 1

**FIG. 2**

FIG. 3

IRQ

Q12

Q13

Q13 ∧ $\overline{Q12}$

Q13 ∧ Q12

T0  T1  T2

PERIOD A  PERIOD B  PERIOD C

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 419 067 (IBM CORPORATION) <br> * page 4, line 31 - page 5, line 58 * <br> * figure 1 * <br> --- | 1-8 | G06F13/24 <br> G06F13/38 |
| A | EP-A-0 395 210 (ADVANCED MICRO DEVICES INCORPORATED) <br> * page 2, line 54 - page 3, line 47 * <br> --- | 1-8 | |
| A | EP-A-0 533 428 (NCR INTERNATIONAL INCORPORATED) <br> * column 1, line 37 - column 3, line 45 * <br> * claims 7-11 * <br> ----- | 1-8 | |

| | |
|---|---|
| | TECHNICAL FIELDS SEARCHED (Int.Cl.6) |
| | G06F |

The present search report has been drawn up for all claims

| Place of search | Date of completion of the search | Examiner |
|---|---|---|
| THE HAGUE | 18 November 1994 | McDonagh, F |

EPO FORM 1503 03.82 (P04C01)